# EUROPEAN PATENT APPLICATION

(11) **EP 1 367 820 A2**
(43) Date of publication of application: **03.12.2003**
(21) Application number: 03011225.4
(22) Date of filing: 16.05.2003
(51) Int. Cl.: H04N 5/44

(54) **Video signal processing device**

(30) Priority: 27.05.2002 JP 2002152749
(71) Applicant: MATSUSHITA ELECTRIC INDUSTRIAL CO., LTD., Kadoma-shi, Osaka 571-8501 (JP)
(72) Inventor: Kaida, Kunihiro, Neyagawa-shi, Osaka 572-0027 (JP); Takeuchi, Koso, Osaka-shi, Osaka 534-0016 (JP)
(74) Representative: Grünecker, Kinkeldey, Stockmair & Schwanhäusser Anwaltssozietät

(57) **Abstract**

A video signal processing device of the invention includes an IP conversion means for converting an interlaced video signal that has been input into a progressive video signal and outputting it, a synthesis means for synthesizing the progressive video signal and a sub-picture or OSD that has been input and outputting the result as a progressive video signal, and a PI conversion means for converting the progressive video signal into an interlaced video signal and outputting it. The progressive video signal and the interlaced video signal are both output. Thus, the picture quality of synthetic sub-pictures or OSDs is not deteriorated and the progressive video signal and the interlaced video signal can be output simultaneously.

## Description

### BACKGROUND OF THE INVENTION

The present invention relates to video signal processing devices that simultaneously output progressive video signals and interlaced video signals.

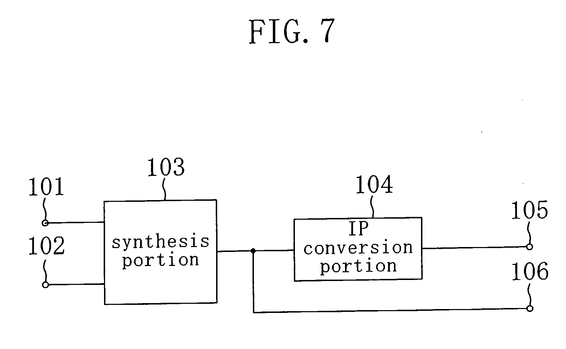

A conventionally known video signal processing device is shown in Fig. 7. This device synthesizes an interlaced video signal and a sub-picture according to the DVD standard (hereinafter referred to as "sub-picture") or an on-screen display (hereinafter abbreviated as "OSD"), converts the interlaced video signal into a progressive video signal, and simultaneously outputs the progressive video signal and the interlaced video signal.

Fig. 7 is a diagram showing a conventional video signal processing device.

The video signal processing device shown in Fig. 7 has a terminal **101** for input of interlaced video signals, a terminal **102** for input of signals displaying a sub-picture or an OSD, a synthesis portion **103** for synthesizing the interlaced video signal that is input from the input terminal **101** and the signal displaying a sub-picture or an OSD that is input from the input terminal **102**, an IP conversion portion **104** for converting the interlaced synthetic video signal that is output from the synthesis portion **103** into a progressive video signal, an output terminal **105** for outputting the progressive video signal from the IP conversion portion **104**, and an output terminal **106** for outputting the synthetic video signal from the synthesis portion **103**.

Next, the operation of the video signal processing device shown in Fig. 7 is described.

The synthesis portion **103** synthesizes the interlaced video signal that is input from the input terminal **101** and the interlaced signal displaying a sub-picture or an OSD that is input from the input terminal **102**, and outputs the synthetic video signal. The synthetic video signal is output from the output terminal **106** as an interlaced video signal. The synthetic video signal that is output from the synthesis portion **103** is input to the IP conversion portion **104**. The IP conversion portion **104** employs scan line interpolation to convert the interlaced synthetic video signal into a progressive video signal, and the progressive video signal is then output from the output terminal **105**.

However, as mentioned above, the interlaced video signal is synthesized with the signal displaying a sub-picture or an OSD before it is converted to a progressive video signal, and thus scan line interpolation causes the sub-picture or OSD image to become blurred. Therefore, the quality of the video image is deteriorated.

Also, as mentioned above, the interlaced video image and the sub-picture are synthesized in the interlaced format. If synthesis is performed in the interlaced format and the display lines displaying the sub-picture are managed by the frame line numbers, then the line numbers must be converted to field line numbers. Consequently, the scale of the circuit becomes large.

Further, as mentioned above, if a plurality of field data are employed when the interlaced video signal is converted into a progressive video signal by the IP conversion portion **104**, then delays that accompany conversion occur in field units. This causes a time difference between the output of the progressive video signal from the output terminal **105** and the output of the interlaced video signal from the output terminal **106**.

### SUMMARY OF THE INVENTION

It is an object of the invention is provide a video signal processing device with which the picture quality is not deteriorated.

It is a further object of the invention to provide a video signal processing device with which the circuit scale does not become large.

It is yet a further object of the invention to provide a video signal processing device with which no time difference occurs between the output of a progressive-type video signal and an interlaced-type video signal.

More specifically, to achieve the above objects, a video signal processing device of the invention is provided with an IP conversion means for converting a first interlaced video signal, which has been input, into a first progressive video signal and outputting it, a synthesis means for synthesizing the first progressive video signal and a sub-video signal for displaying a sub-video that has been input and outputting the result as a second progressive video signal, and a PI conversion means for converting the second progressive video signal into a second interlaced video signal and outputting it, and the second progressive video signal and the second interlaced video signal are both output.

Therefore, after the interlaced video signal is converted into a progressive video signal it is synthesized with the sub-video. Thus, a deterioration of the picture quality can be prevented without the sub-video becoming blurred. Also, because the sub-video is synthesized to a progressive video signal, it is not necessary to convert the line numbers to field line numbers, which allows the circuit scale to be kept small.

In the video signal processing device of the invention, it is preferable that the sub-video signal that is synthesized by the synthesis means is a signal for displaying a sub-picture or an on-screen display.

In the video signal processing device of the invention, it is preferable that the IP conversion means interpolates scan lines from the first interlaced video signal so as to convert the first interlaced video signal into the first progressive video signal and outputs the first progressive video signal, and that the PI conversion means decimates the scan lines that have been interpolated by the IP conversion means so as to convert the second progressive video signal into the second interlaced video signal and outputs the second interlaced video signal.

In the video signal processing device of the invention, it is preferable that the IP conversion means interpolates scan lines from the first interlaced video signal so as to convert the first interlaced video signal into the first progressive video signal and outputs the first progressive video signal, and outputs to the PI conversion means a field identification signal that indicates whether the first progressive video signal has been interpolated from scan lines of an odd-numbered field or an even-numbered field of the first interlaced video signal, and that the PI conversion means decimates even-numbered scan lines of the second progressive video signal and converts these to the second interlaced video signal if from the field identification signal it is determined that the first progressive video signal has been interpolated from scan lines of an odd-numbered field of the first interlaced video signal, and decimates odd-numbered scan lines of the second progressive video signal and converts these to the second interlaced video signal if from the field identification signal it is determined that the first progressive video signal has been interpolated from scan lines of an even-numbered field of the first interlaced video signal.

To achieve the above objects, another video signal processing device of the invention is provided with an IP conversion means for converting a first interlaced video signal, which has been input, into a first progressive video signal and outputting it, a synthesis means for synthesizing the first progressive video signal and a sub-video signal for displaying a sub-video that has been input and outputting the result as a second progressive video signal, a PI conversion means for converting the second progressive video signal into a second interlaced video signal and outputting it, and a field signal generation means for outputting a field identification signal that indicates whether a field of the second interlaced video signal from the PI conversion means is an odd-numbered field or an even-numbered field, and the second progressive video signal and the second interlaced video signal are both output.

Therefore, after the interlaced video signal is converted into a progressive video signal it is synthesized with the sub-video. Thus, a deterioration of the picture quality can be prevented without the sub-video becoming blurred. Also, because the sub-video is synthesized to a progressive video signal, it is not necessary to convert the line numbers to field line numbers, which allows the circuit scale to be kept small.

In the video signal processing device of the invention, it is preferable that the sub-video signal that is synthesized by the synthesis means is a signal for displaying a sub-picture or an on-screen display.

In the video signal processing device of the invention, it is preferable that the IP conversion means interpolates scan lines from the first interlaced video signal so as to convert the first interlaced video signal into the first progressive video signal and outputs the first progressive video signal, and that the PI conversion means decimates the scan lines that have been interpolated by the IP conversion means so as to convert the second progressive video signal into the second interlaced video signal and outputs the second interlaced video signal.

In the video signal processing device of the invention, it is preferable that the IP conversion means, in a case where the field identification signal received from the field signal generation means indicates an odd-numbered field, interpolates scan lines from an odd-numbered field of the first interlaced video signal so as to convert the first interlaced video signal into the first progressive video signal and outputs the first progressive video signal, and in a case where the field identification signal received from the field signal generation means indicates an even-numbered field, interpolates scan lines from an even-numbered field of the first interlaced video signal so as to convert the first interlaced video signal into the first progressive video signal and outputs the first progressive video signal, and that the PI conversion means decimates even-numbered scan lines of the second progressive video signal and converts these to the second interlaced video signal if the field identification signal received from the field signal generation means indicates an odd-numbered field, and decimates odd-numbered scan lines of the second progressive video signal and converts these to the second interlaced video signal if the field identification signal received from the field signal generation means indicates an even-numbered field.

To solve the above problems, a yet further video signal processing device of the invention is provided with an IP conversion means for converting a first interlaced video signal, which has been input, into a first progressive video signal and outputting it, a synthesis means for synthesizing the first progressive video signal and a sub-video signal for displaying a sub-video that has been input and outputting the result as a second progressive video signal, a line memory for converting the second progressive video signal into the second interlaced video signal and outputting it, a progressive horizontal synchronizing pulse generation means for outputting a progressive horizontal synchronizing pulse signal based on a clock signal that is input, an interlaced horizontal synchronizing pulse generation means for outputting an interlaced horizontal synchronizing pulse signal based on the clock signal, a field signal generation means for outputting a field identification signal that indicates whether a field of the second interlaced video signal from the line memory is an odd-numbered field or an even-numbered field, based on the interlaced horizontal synchronizing pulse signal from the interlaced horizontal synchronizing pulse generation means, a write control means for outputting to the line memory a write control signal for controlling writing of the second progressive video signal to the line memory, based on the progressive horizontal synchronizing pulse signal from the progressive horizontal synchronizing pulse generation means and the field identification signal from the field signal generation means, and a read control means for outputting to the line memory a read control signal for controlling reading of the second interlaced video signal from the line memory, based on the interlaced horizontal synchronizing pulse signal from the interlaced horizontal synchronizing pulse generation means and the field identification signal from the field signal generation means, and the second progressive video signal that is output from the synthesis means and the second interlaced video signal that is read out from the line memory are both output.

Therefore, after the interlaced video signal is converted into a progressive video signal it is synthesized with the sub-video. Thus, a deterioration of the picture quality can be prevented without the sub-video becoming blurred. Also, because the sub-video is synthesized to a progressive video signal, it is not necessary to convert the line numbers to field line numbers, which allows the circuit scale to be kept small.

In the video signal processing device of the invention, it is preferable that the sub-video signal that is synthesized by the synthesis means is a signal for displaying a sub-picture or an on-screen display.

In the video signal processing device of the invention, it is preferable that the IP conversion means, in a case where the field identification signal received from the field signal generation means indicates an odd-numbered field, interpolates scan lines from an odd-numbered field of the first interlaced video signal so as to convert the first interlaced video signal into the first progressive video signal and outputs the first progressive video signal, and in a case where the field identification signal received from the field signal generation means indicates an even-numbered field, interpolates scan lines from an even-numbered field of the first interlaced video signal so as to convert the first interlaced video signal into the first progressive video signal and outputs the first progressive video signal; that the write control means outputs the write control signal for writing the odd-numbered scan lines of the second progressive video signal to the line memory if the field identification signal from the field signal generation means indicates an odd-numbered field, and outputs the write control signal for writing the even-numbered scan lines of the second progressive video signal to the line memory if the field identification signal from the field signal generation means indicates an even-numbered field; and that the read control means outputs the read control signal for reading, as the second interlaced video signal, scan lines of the second progressive video signal that have been written to the line memory according to the read control signal from the read control means.

### BRIEF DESCRIPTION OF THE DRAWINGS

Fig. **1** is a diagram showing an example of the configuration of the video signal processing device according to the first embodiment of the invention.
Fig. **2** is a diagram for illustrating an example of conversion by the IP conversion portion.
Fig. **3** is a diagram for illustrating an example of conversion by the PI conversion portion.
Fig. **4** is a diagram showing an example of the configuration of the video signal processing device according to the second embodiment of the invention.
Fig. **5** is a diagram showing an example of the configuration of the video signal processing device according to the third embodiment of the invention.
Fig. **6** is a diagram for illustrating an example of PI conversion using the line memory, the write control portion, and the read control portion.
Fig. **7** is a diagram showing an example of the configuration of a conventional video signal processing device.

### DETAILED DESCRIPTION OF THE INVENTION

Hereinafter, embodiments of the invention are described with reference to the drawings.

### First Embodiment

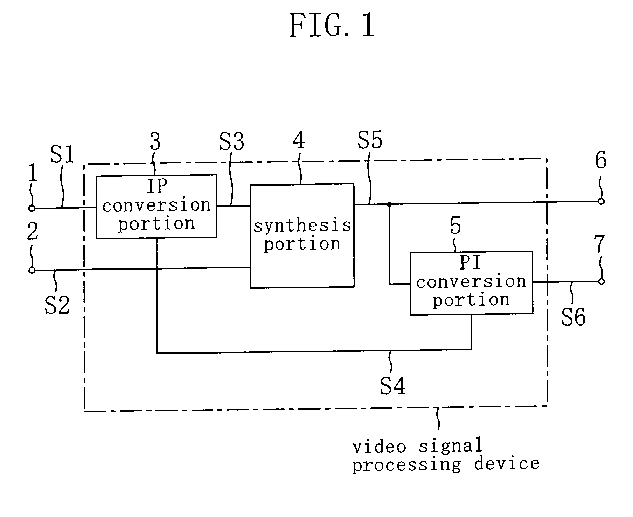

Fig. **1** is a diagram showing a configuration example of the video signal processing device according to the first embodiment of the invention.

The video signal processing device shown in Fig. **1** has an input terminal **1**, an input terminal **2**, an IP conversion portion **3** (corresponds to the IP conversion means), a synthesis portion **4** (corresponds to the synthesis means), a PI conversion portion **5** (corresponds to the PI conversion means), an output terminal **6**, and an output terminal **7**.

The input terminal **1** is for input of an interlaced video signal **S1** (corresponds to the first interlaced video signal).

The input terminal **2** is for input of a signal **S2** (corresponds to the sub-video signal) for displaying a sub-picture according to the DVD standard (hereinafter referred to as "sub-picture") or an on-screen display (hereinafter abbreviated as "OSD").

The IP conversion portion **3** converts the interlaced video signal **S1** from the input terminal **1** into a progressive video signal **S3** (corresponds to the first progressive video signal) using scan line interpolation, and outputs this signal. Moreover, the IP conversion portion **3** uses an internally provided identification portion **3a** (not shown) to identify whether the progressive video signal **S3** that is output is based on an interface video signal **S1** on which scan line interpolation has been performed for the odd-numbered field or for the even-numbered field, and outputs to the PI conversion portion **5** an even/odd field identification signal **S4** (corresponds to the field identification signal) indicating which of these fields have been subjected to scan line interpolation.

The synthesis portion **4** synthesizes the progressive video signal **S3** that is output from the IP conversion portion **3** and the signal **S2** displaying a sub-picture or an OSD from the input terminal **2**, and outputs a progressive synthetic video signal **S5** (corresponds to the second progressive video signal).

The PI conversion portion **5** converts the progressive synthetic video signal **S5** from the synthesis portion **4** into an interlaced video signal **S6** (corresponds to the second interlaced video signal) based on the even/odd field identification signal **S4** that is input from the IP conversion portion **3**.

The output terminal **6** outputs the progressive synthetic video signal **S5** from the synthesis portion **4**.

The output terminal **7** outputs the interlaced video signal **S6** from the PI conversion portion **5**.

Next, the operation of the video signal processing device according to this embodiment and configured as above is described.

The interlaced video signal **S1** that is input from the input terminal **1** is converted into the progressive video signal **S3** by the IP conversion portion **3** through scan line interpolation (described in detail later). Then, the synthesis portion **4** synthesizes the progressive video signal **S3** and the signal **S2** displaying a sub-picture or an OSD from the input terminal **2**, and outputs the synthetic video signal **S5**. The synthetic video signal **S5** from the synthesis portion **4** is output from the output terminal **6**. Also, the progressive synthetic video signal **S5** from the synthesis portion **4** is converted to the interlaced video signal **S6** by the PI conversion portion **5** (explained in detail later), and is output from the output terminal **7**.

The specific operation of the IP conversion portion **3** is described next.

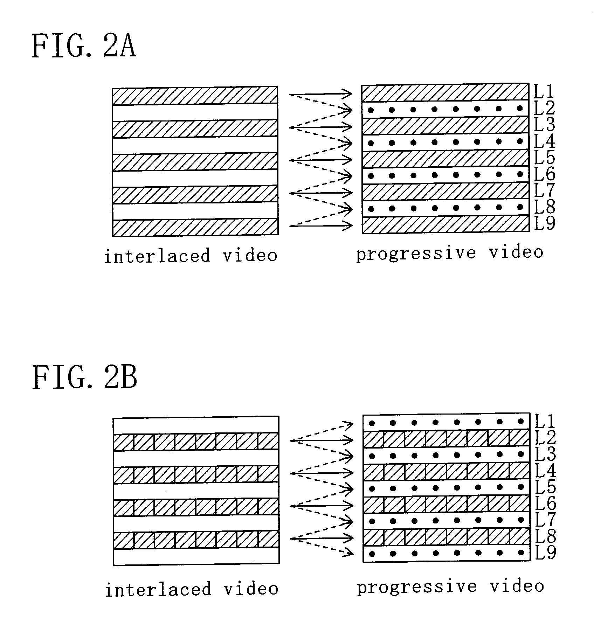

Fig. **2** is a diagram for illustrating an example of conversion from the interlaced video signal **S1** to the progressive video signal **S3**.

Fig. **2A** is a diagram for describing an example of conversion in which the interlaced video signal **S1** that is input to the IP conversion portion **3** is an odd-numbered field. Fig. **2B** is a diagram for describing an example of conversion in which the interlaced video signal **S1** that is input to the IP conversion portion **3** is an even-numbered field.

As shown in Fig. **2A**, if the interlaced video signal **S1** that is input is an odd-numbered field, then the IP conversion portion **3** outputs the interlaced video signal **S1** as the odd-numbered scan lines of the progressive video signal **S3**. At this time, the IP conversion portion **3** outputs the interlaced video signal **S1** as the odd-numbered scan lines of the progressive video signal **S3** at twice the speed at which the interlaced video signal **S1** is input. Also, the even-numbered scan lines of the progressive video signal **S3** are interpolated from the scan lines before and after the lines of the interlaced video signal **S1**, and are output. Moreover, in this case, the IP conversion portion **3** outputs an L-level even/odd field identification signal **S4**.

On the other hand, as shown in Fig. **2B**, if the interlaced video signal **S1** that is input is an even-numbered field, then the IP conversion portion **3** outputs the interlaced video signal **S1** as the even-numbered scan lines of the progressive video signal **S3**. At this time, the IP conversion portion **3** outputs the interlaced video signal **S1** as the even-numbered scan lines of the progressive video signal **S3** at twice the speed at which the interlaced video signal **S1** is input. Also, the odd-numbered scan lines of the progressive video signal **S3** are interpolated from the scan lines before and after the lines of the interlaced video signal **S1**, and are output. Moreover, in this case, the IP conversion portion **3** outputs an H-level even/odd field identification signal **S4**.

It should be noted that the method for scan line interpolation that has been described is a method of interpolation using the two lines before and after the scanned lines, however, there are no limitations to this.

Next, the specific operation of the PI conversion portion **5** is described.

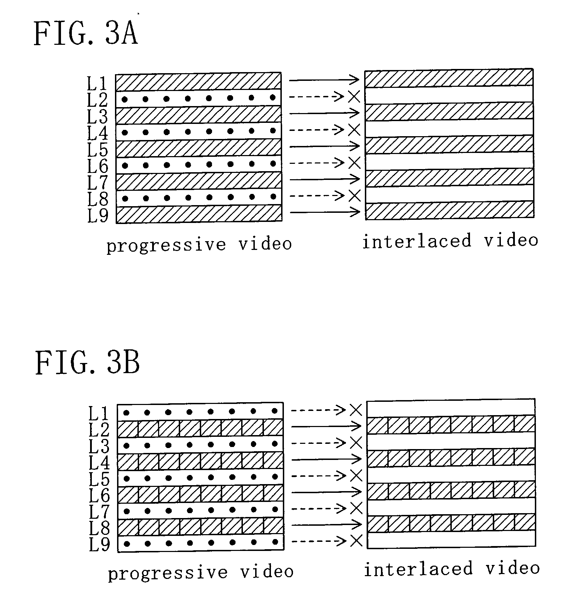

Fig. **3** is a diagram for explaining examples of conversion from the progressive synthetic video signal **S5** to the interlaced video signal **S6**.

Fig. **3A** is a diagram for illustrating an example of conversion when the even/odd identification signal **S4** that is input to the PI conversion portion **5** is L-level, and Fig. **3B** is a diagram for illustrating an example of conversion when the even/odd field identification signal **S4** that is input to the PI conversion portion **5** is H-level.

As shown in Fig. **3A**, if the even/odd field identification signal **S4** is L-level, then the PI conversion portion **5** outputs the odd-numbered scan lines of the progressive synthetic video signal **S5** that has been input to serve as the interlaced video signal **S6**, and does not output the even-numbered scan lines. Also, the output of the odd-numbered scan lines is made at half the speed at which the synthetic video signal **S5** is input to the PI conversion portion 5.

As shown in Fig. **3B**, if the even/odd field identification signal **S4** is H-level, then the PI conversion portion **5** outputs the even-numbered scan lines of the progressive synthetic video signal **S5** that has been input to serve as the interlaced video signal **S6**, and does not output the odd-numbered scan lines. Also, the output of the even-numbered scan lines is made at half the speed at which the synthetic video signal **S5** is input to the PI conversion portion **5**.

Thus, depending on whether the even/odd field identification signal **S4** is L-level or H-level, by decimating either the even-numbered or the odd-numbered lines of the respective progressive synthetic video signal **S5**, the interlaced video signal **S6** that is output from the PI conversion portion **5** becomes a signal equivalent to the interlaced video signal **S1** that is input to the input terminal **1**.

Also, because the PI conversion portion **5** outputs half the number of the scan lines of the progressive synthetic video signal **S5** that is input at half the speed at which the progressive synthetic video signal **S5** is input, no time difference occurs between the progressive synthetic video signal **S5** that is input and the interlaced video signal **S6** that is output. To put it differently, no time difference occurs between the progressive synthetic video signal **S5** that is output from the output terminal **6** and the interlaced video signal **S6** that is output from the output terminal **7**.

It should be noted that in the example described above, a sub-picture or an OSD serves as the video that is synthesized to the first progressive video signal **S3**, however, the present invention is not limited to this, and the invention can be similarly embodied even if a video used as a sub-video is displayed.

As described above, the video signal processing device according to the first embodiment of the invention synthesizes the interlaced video signal **S1** that is input and the signal **S2** that displays a sub-picture or an OSD after the interlaced video signal **S1** has been converted to the progressive video signal **S3**. For this reason, the progressive synthetic video signal **S5** that is output from the output terminal **6** does not exhibit a blurred sub-picture or OSD image due to scan line interpolation, which allows the picture quality to be kept from deteriorating.

Also, because the sub-picture is synthesized to the progressive video signal **S3**, it is no longer necessary to convert the display lines displaying the sub-picture, which is managed by frame line numbers, to field line numbers, and thus the scale of the circuit can be kept small.

Moreover, because the scan lines interpolated by the IP conversion portion **3** are decimated by the PI conversion portion **5**, the interlaced video signal **S1** that is input from the input terminal **1** and the interlaced video signal **S6** that is output from the output terminal **7** are equivalent signals, and thus deterioration of picture quality due to the interlaced video signal **S6** can be prevented. Also, as mentioned above, no time difference occurs between the progressive synthetic video signal **S5** that is output from the output terminal **6** and the interlaced video signal **S6** that is output from the output terminal **7**.

### Second Embodiment

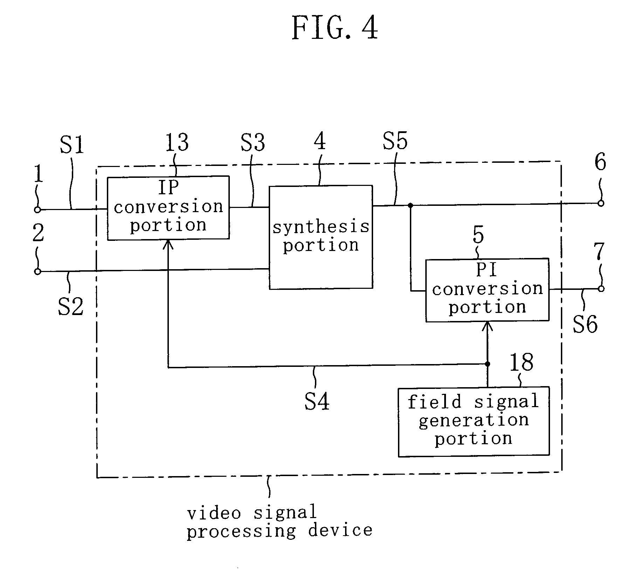

Fig. **4** is a diagram showing an example of the configuration of the video signal processing device according to a second embodiment of the invention.

The video signal processing device shown in Fig. **4** has an input terminal **1**, an input terminal **2**, an IP conversion portion **13** (corresponds to the IP conversion means), a synthesis portion **4** (corresponds to the synthesis means), a PI conversion portion **5** (corresponds to the PI conversion means), a field signal generation portion **18** (corresponds to the field signal generation means), an output terminal **6**, and an output terminal **7**.

The input terminal **1** is for input of an interlaced video signal **S1** (corresponds to the first interlaced video signal).

The input terminal **2** is for input of a signal **S2** (corresponds to the sub-video signal) displaying a sub-picture or an OSD.

The IP conversion portion **13** converts the interlaced video signal **S1** from the input terminal **1** into a progressive video signal **S3** (corresponds to the first progressive video signal) through scan line interpolation based on a later-described even/odd field identification signal **S4** that is input from the field signal generation portion **18**, and outputs this signal.

The synthesis portion **4** synthesizes the progressive video signal **S3** that is output from the IP conversion portion **13** and the signal **S2** displaying a sub-picture or an OSD from the terminal **2**, and outputs a progressive synthetic video signal **S5** (corresponds to the second progressive video signal).

The PI conversion portion **5** converts the progressive synthetic video signal **S5** from the synthesis portion **4** into an interlaced video signal **S6** (corresponds to the second interlaced video signal) based on the later-described even/odd field identification signal **S4** that is input from the field signal generation portion **18**.

The field signal generation portion **18** outputs the even/odd field identification signal **S4** (corresponds to the field identification signal), which indicates whether the interlaced video signal **S6** that is output from the PI conversion portion **5** is an odd-numbered field or an even-numbered field. The field signal generation portion **18** outputs an L-level even/odd field identification signal **S4** in the case of an odd-numbered field, and outputs an H-level even/odd field identification signal **S4** in the case of an even-numbered field.

The output terminal **6** outputs the progressive synthetic video signal **S5** from the synthesis portion **4**.

The output terminal **7** outputs the interlaced video signal **S6** from the PI conversion portion **5**.

Next, the operation of the video signal processing device according to this embodiment and configured as above is described.

The interlaced video signal **S1** that is input from the input terminal **1** is converted into the progressive video signal **S3** through scan line interpolation by the IP conversion portion **13** (described in detail later). Then, the synthesis portion **4** synthesizes the progressive video signal **S3** and the signal **S2** displaying a sub-picture or an OSD from the input terminal **2**, and outputs the synthetic video signal **S5**. The synthetic video signal **S5** from the synthesis portion **4** is output from the output terminal **6**. Also, the progressive synthetic video signal **S5** from the synthesis portion **4** is converted into the interlaced video signal **S6** by the PI conversion portion **5** based on the even/odd field identification signal **S4**, and is output from the output terminal **7**.

Next, the specific operation of the IP conversion portion **13** is described with reference to Fig. **2**.

As shown in Fig. **2A**, if the even/odd field identification signal **S4** from the field signal generation portion **18** is L-level, then an odd-numbered field of the interlaced video signal **S1** is input. In this case, the IP conversion portion **13** outputs the interlaced video signal **S1** as odd-numbered scan lines of the progressive video signal **S3**. At this time, the IP conversion portion **13** outputs the interlaced video signal **S1** as odd-numbered scan lines of the progressive video signal **S3** at twice the speed at which the interlaced video signal **S1** is input. Also, the even-numbered scan lines of the progressive video signal **S3** are interpolated from the scan lines before and after the lines of the interlaced video signal **S1** and are output.

On the other hand, as shown in Fig. **2B**, if the even/odd field identification signal **S4** from the field signal generation portion **18** is H-level, then an even-numbered field of the interlaced video signal **S1** is input. In this case, the IP conversion portion **13** outputs the interlaced video signal **S1** as even-numbered scan lines of the progressive video signal **S3**. At this time, the IP conversion portion **13** outputs the interlaced video signal **S1** as even-numbered scan lines of the progressive video signal **S3** at twice the speed at which the interlaced video signal **S1** is input. Also, the odd-numbered scan lines of the progressive video signal **S3** are interpolated from the scan lines before and after the lines of the interlaced video signal **S1** and are output.

It should be noted that the method for scan line interpolation that has been described is a method of interpolation using the two lines before and after the scanned lines, however, there are no limitations to this.

Also, the operation of the PI conversion portion **5** is the same as described in the first embodiment, and thus description thereof is omitted.

As described above, with the video signal processing device according to the second embodiment of the invention, the even/odd field identification signal **S4** is generated by the field signal generation portion **18**, and thus the device of this embodiment differs from the device of the first embodiment only in that the means for generating the even/odd field identification signal **S4** are different. Therefore, the device of this embodiment exhibits the same effects as the device of the first embodiment.

### Third Embodiment

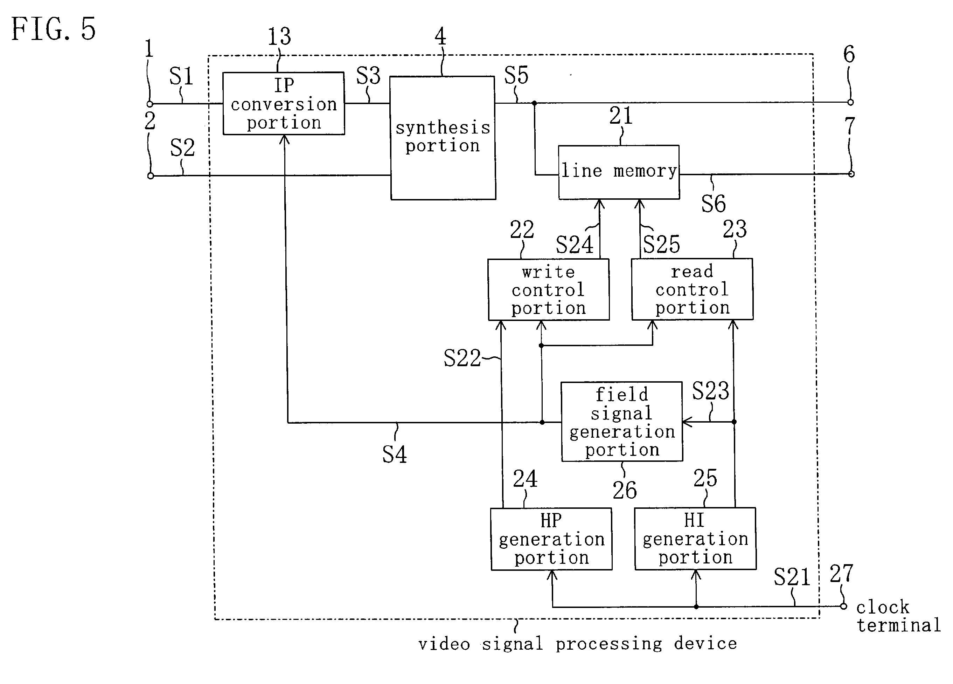

Fig. **5** is a diagram showing an example of the configuration of the video signal processing device according to the third embodiment of the invention.

The video signal processing device shown in Fig. **5** has an input terminal **1**, an input terminal **2**, an IP conversion portion **13** (corresponds to the IP conversion means), a synthesis portion **4** (corresponds to the synthesis means), a line memory **21**, a write control portion **22** (corresponds to the write control means), a read control portion **23** (corresponds to the read control means), an HP generation portion **24** (corresponds to the progressive horizontal synchronizing pulse generation means), an HI generation portion **25** (corresponds to the interlaced horizontal synchronizing pulse generation means), a field signal generation portion **26** (corresponds to the field signal generation means), a clock input terminal **27**, an output terminal **6**, and an output terminal **7**.

The HP generation portion **24** generates a progressive-type horizontal synchronizing pulse signal **S22** (hereinafter referred to as "progressive horizontal synchronizing pulse signal") from a clock signal **S21** received from the clock input terminal **27**, and outputs it.

The HI generation portion **25** generates an interlaced-type horizontal synchronizing pulse signal **S23** (hereinafter referred to as "interlaced horizontal synchronizing pulse signal") from the clock signal **S21** received from the clock input terminal **27**, and outputs it.

The field signal generation portion **26** outputs the even/odd field identification signal **S4** (corresponds to the field identification signal), which indicates whether the interlaced video signal **S6** that is output from the line memory **21** is an odd-numbered field or an even-numbered field, based on the interlaced horizontal synchronizing pulse signal **S23** from the HI generation portion **25**. The field signal generation portion **26** outputs an L-level even/odd field identification signal **S4** in the case of an odd-numbered field and outputs an H-level even/odd field identification signal **S4** in the case of an even-numbered field.

The write control portion **22** outputs a write control signal **S24** to the line memory **21** based on the progressive horizontal synchronizing pulse signal **S22** from the HP generation portion **24** and the even/odd field identification signal **S4**.

The read control portion **23** outputs a read control signal **S25** to the line memory **21** based on the interlaced horizontal synchronizing pulse signal **S23** from the HI generation portion **25** and the even/odd field identification signal **S4**.

It should be noted that here a description of structural elements that perform the same operation as the structural elements shown in Fig. **4** according to the second embodiment has been omitted.

First, the operation of the video signal processing device according to the third embodiment and configured as above is described briefly.

The interlaced video signal **S1** (corresponds to the first interlaced video signal) that is input from the input terminal **1** is converted into the progressive video signal **S3** (corresponds to the first progressive video signal) through scan line interpolation by the IP conversion portion **13**. Then, the synthesis portion **4** synthesizes the progressive video signal **S3** and the signal **S2** displaying a sub-picture or an OSD from the input terminal **2**, and outputs the synthetic video signal **S5** (corresponds to the second progressive video signal). The synthetic video signal **S5** from the synthesis portion **4** is output from the output terminal **6**. Also, the progressive synthetic video signal **S5** from the synthesis portion **4** is written into the line memory **21**. The video signal that is read out from the line memory is output from the output terminal **7** as the interlaced video signal **S6** (corresponds to the second interlaced video signal).

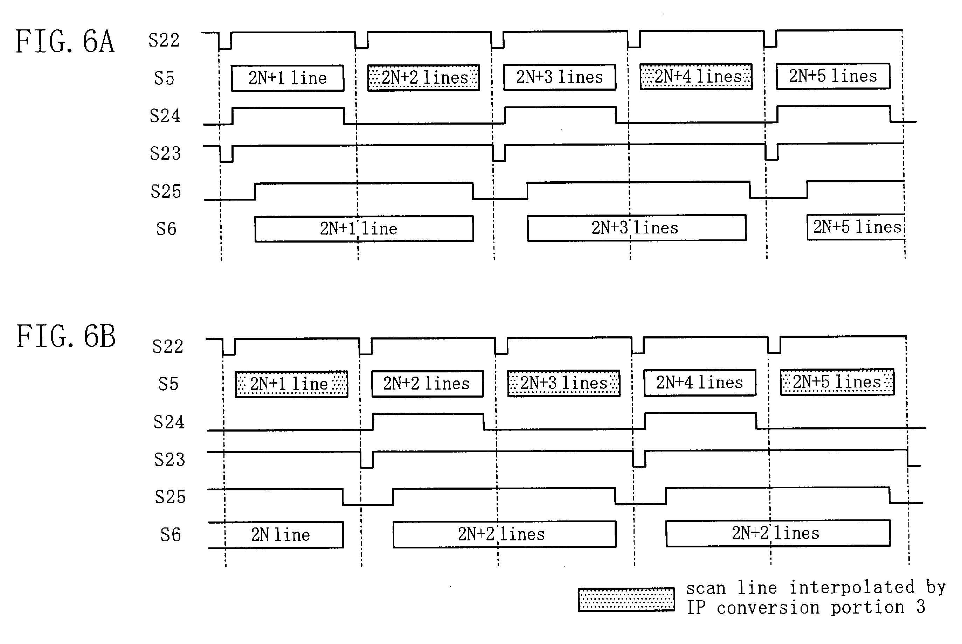

Next, the specific operations of the line memory **21**, the write control portion **22**, and the read control portion **23** are described with reference to Fig. **6**.

Fig. **6** is a diagram for illustrating examples of conversion from the progressive synthetic video signal **S5** to the interlaced video signal **S6** using the line memory **21**, the write control portion **22**, and the read control portion **23**.

Fig. **6A** is a diagram for illustrating the operation when the even/odd field identification signal **S4** is L-level, and Fig. **6B** is a diagram for illustrating the operation when the even/odd field identification signal **S4** is H-level. It should be noted that N in Fig. **6** is an integer.

The case shown in Fig. **6A**, in which the even/odd field identification signal **S4** is L-level, is described next. The write control signal **S24** that is generated from the progressive horizontal synchronizing pulse signal **S22** is H-level only when the progressive synthetic video signal **S5** is an odd-numbered line, and during the period that the write control signal **S24** is H-level the progressive video signal **S5** is written into the line memory **21**. Then, during the period that the read control signal **S25** generated from the interlaced horizontal synchronizing pulse signal **S23** is H-level, the interlaced video signal **S6** is read out at half the speed of the synthetic video signal **S5**.

Next, the case shown in Fig. **6B**, in which the even/odd field identification signal **S4** is H-level, is described. The write control signal **S24** that is generated from the progressive horizontal synchronizing pulse signal **S22** is H-level only when the progressive synthetic video signal **S5** is an even-numbered line, and during the period that the write control signal **S24** is H-level the progressive video signal **S5** is written into the line memory **21**. Then, during the period that the read control signal **S25** generated from the interlaced horizontal synchronizing pulse signal **S23** is H-level, the interlaced video signal **S6** is read out at half the speed of the synthetic video signal **S5**.

Thus, in accordance with whether the even/odd field identification signal **S4** is L-level or H-level, by decimating either the even-numbered or the odd-numbered lines of the progressive synthetic video signal **S5**, the interlaced video signal **S6** that is output from the line memory **21** becomes a signal equivalent to the interlaced video signal **S1** that is input to the input terminal **1**.

Also, because the line memory **21** outputs half the number of the scan lines of the input progressive synthetic video signal **S5** at half the speed at which the progressive synthetic video signal **S5** is input, no time difference occurs between the progressive synthetic video signal **S5** that is input and the interlaced video signal **S6** that is output. To put it differently, no time difference occurs between the progressive synthetic video signal **S5** that is output from the output terminal **6** and the interlaced video signal **S6** that is output from the output terminal **7**.

As described above, the video signal processing device according to the third embodiment of the invention is capable of achieving the same effects as the devices of the first and the second embodiments.

As described above, with the present invention, the sub-picture or the OSD is synthesized after the interlaced video signal has been converted into a progressive video signal, and thus a blurred sub-picture or OSD image caused by scan line interpolation can be eliminated and the picture quality can be kept from deteriorating. Also, by decimating the scan lines that have been interpolated in the conversion from the interlaced video signal to a progressive video signal, a deteriorated picture quality due to the output of an interlaced video signal can be prevented.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A video signal processing device comprising:
an IP conversion means for converting a first interlaced video signal, which has been input, into a first progressive video signal and outputting it;
a synthesis means for synthesizing the first progressive video signal and a sub-video signal for displaying a sub-video that has been input, and outputting the result as a second progressive video signal; and
a PI conversion means for converting the second progressive video signal into a second interlaced video signal and outputting it;
wherein the second progressive video signal and the second interlaced video signal are both output.

2. The video signal processing device according to claim 1, wherein the sub-video signal that is synthesized by the synthesis means is a signal for displaying a sub-picture or an on-screen display.

3. The video signal processing device according to claim 1 or claim 2, wherein the IP conversion means interpolates scan lines from the first interlaced video signal so as to convert the first interlaced video signal into the first progressive video signal, and outputs the first progressive video signal, and
the PI conversion means decimates the scan lines that have been interpolated by the IP conversion means so as to convert the second progressive video signal into the second interlaced video signal, and outputs the second interlaced video signal.

4. The video signal processing device according to claim 3, wherein the IP conversion means
interpolates scan lines from the first interlaced video signal so as to convert the first interlaced video signal into the first progressive video signal, and outputs the first progressive video signal, and
outputs to the PI conversion means a field identification signal that indicates whether the first progressive video signal has been interpolated from scan lines of an odd-numbered field or an even-numbered field of the first interlaced video signal, and
the PI conversion means decimates even-numbered scan lines of the second progressive video signal and converts these to the second interlaced video signal if from the field identification signal it is determined that the first progressive video signal has been interpolated from scan lines of an odd-numbered field of the first interlaced video signal, and
decimates odd-numbered scan lines of the second progressive video signal and converts these to the second interlaced video signal if from the field identification signal it is determined that the first progressive video signal has been interpolated from scan lines of an even-numbered field of the first interlaced video signal.

5. A video signal processing device comprising:
an IP conversion means for converting a first interlaced video signal, which has been input, into a first progressive video signal and outputting it;
a synthesis means for synthesizing the first progressive video signal and a sub-video signal for displaying a sub-video that has been input and outputting the result as a second progressive video signal;
a PI conversion means for converting the second progressive video signal into a second interlaced video signal and outputting it; and
a field signal generation means for outputting a field identification signal that indicates whether a field of the second interlaced video signal from the PI conversion means is an odd-numbered field or an even-numbered field;
wherein the second progressive video signal and the second interlaced video signal are both output.

6. The video signal processing device according to claim 5, wherein the sub-video signal that is synthesized by the synthesis means is a signal for displaying a sub-picture or an on-screen display.

7. The video signal processing device according to claim 5 or claim 6, wherein the IP conversion means interpolates scan lines from the first interlaced video signal so as to convert the first interlaced video signal into the first progressive video signal and outputs the first progressive video signal, and
the PI conversion means decimates the scan lines that have been interpolated by the IP conversion means so as to convert the second progressive video signal into the second interlaced video signal and outputs the second interlaced video signal.

8. The video signal processing device according to claim 7, wherein the IP conversion means
in a case where the field identification signal received from the field signal generation means indicates an odd-numbered field, interpolates scan lines from an odd-numbered field of the first interlaced video signal so as to convert the first interlaced video signal into the first progressive video signal and outputs the first progressive video signal, and
in a case where the field identification signal received from the field signal generation means indicates an even-numbered field, interpolates scan lines from an even-numbered field of the first interlaced video signal so as to convert the first interlaced video signal into the first progressive video signal and outputs the first progressive video signal; and
wherein the PI conversion means decimates even-numbered scan lines of the second progressive video signal and converts these to the second interlaced video signal if the field identification signal received from the field signal generation means indicates an odd-numbered field, and
decimates odd-numbered scan lines of the second progressive video signal and converts these to the second interlaced video signal if the field identification signal received from the field signal generation means indicates an even-numbered field.

9. A video signal processing device comprising:
an IP conversion means for converting a first interlaced video signal, which has been input, into a first progressive video signal and outputting it;
a synthesis means for synthesizing the first progressive video signal and a sub-video signal for displaying a sub-video that has been input and outputting the result as a second progressive video signal;
a line memory for converting the second progressive video signal into the second interlaced video signal and outputting it;
a progressive horizontal synchronizing pulse generation means for outputting a progressive horizontal synchronizing pulse signal based on a clock signal that is input;
an interlaced horizontal synchronizing pulse generation means for outputting an interlaced horizontal synchronizing pulse signal based on the clock signal;
a field signal generation means for outputting a field identification signal that indicates whether a field of the second interlaced video signal from the line memory is an odd-numbered field or an even-numbered field, based on the interlaced horizontal synchronizing pulse signal from the interlaced horizontal synchronizing pulse generation means;
a write control means for outputting to the line memory a write control signal for controlling writing of the second progressive video signal to the line memory, based on the progressive horizontal synchronizing pulse signal from the progressive horizontal synchronizing pulse generation means and the field identification signal from the field signal generation means; and
a read control means for outputting to the line memory a read control signal for controlling reading of the second interlaced video signal from the line memory, based on the interlaced horizontal synchronizing pulse signal from the interlaced horizontal synchronizing pulse generation means and the field identification signal from the field signal generation means;
wherein the second progressive video signal that is output from the synthesis means and the second interlaced video signal that is read out from the line memory are both output.

10. The video signal processing device according to claim 9, wherein the sub-video signal that is synthesized by the synthesis means is a signal for displaying a sub-picture or an on-screen display.

11. The video signal processing device according to either claim 9 or claim 10, wherein the IP conversion means
in a case where the field identification signal received from the field signal generation means indicates an odd-numbered field, interpolates scan lines from an odd-numbered field of the first interlaced video signal so as to convert the first interlaced video signal into the first progressive video signal and outputs the first progressive video signal, and
in a case where the field identification signal received from the field signal generation means indicates an even-numbered field, interpolates scan lines from an even-numbered field of the first interlaced video signal so as to convert the first interlaced video signal into the first progressive video signal and outputs the first progressive video signal;
the write control means outputs the write control signal for writing the odd-numbered scan lines of the second progressive video signal to the line memory if the field identification signal from the field signal generation means indicates an odd-numbered field, and
outputs the write control signal for writing the even-numbered scan lines of the second progressive video signal to the line memory if the field identification signal from the field signal generation means indicates an even-numbered field; and
the read control means outputs the read control signal for reading, as the second interlaced video signal, scan lines of the second progressive video signal that have been written to the line memory according to the read control signal from the read control means.
